# EUROPEAN PATENT SPECIFICATION

(11) **EP 0 995 925 B1**
(45) Date of publication and mention of the grant of the patent: **20.08.2003**
(21) Application number: 99203437.1
(22) Date of filing: 19.10.1999
(51) Int. Cl.: F16F 9/05

(54) **Air spring, in particular for an air spring system for a wheel axle of a vehicle**
Luftfeder, insbesondere für ein Luftfedersystem für eine Radachse eines Fahrzeugs
Ressort pneumatique, en particulier pour un système à ressort pneumatique pour essieu de roue d'un véhicule

(30) Priority: 23.10.1998 NL 1010384
(43) Date of publication of application: 26.04.2000
(73) Proprietor: Weweler Nederland B.V., 7332 AP Apeldoorn (NL)
(72) Inventor: Aalderink, Derk Geert, 7245 NV Laren (NL)
(74) Representative: Iemenschot, Johannes Andreas, Ir.

(56) References cited:
- EP-A- 0 296 445
- EP-A- 0 501 043
- DE-U- 29 808 109
- US-A- 3 876 193
- US-A- 5 169 129
- PATENT ABSTRACTS OF JAPAN vol. 096, no. 008, 30 August 1996 (1996-08-30) & JP 08 093822 A (NISSAN DIESEL MOTOR CO LTD), 12 April 1996 (1996-04-12)

## Description

The invention relates to an air spring, in particular for an air spring system for a wheel axle of a vehicle, comprising a rolling bellows, a first end edge of which is connected, in a sealing manner, to an end plate and a second end edge of which is connected, in a sealing manner, to a piston which is coaxial with respect to the rolling bellows, can be moved into and out of the rolling bellows in the axial direction of the rolling bellows, and along which the rolling bellows rolls during this movement, the piston being formed as a single part made from plastic; comprising an inner section and a cylindrical outer casing which is arranged around and joined to the inner section and along which the rolling bellows can roll.

An air spring of this type is known in practice. In this known air spring, the piston is provided, on the side of the end plate, with a stop which projects towards the end plate with respect to the rest of the piston and can come into contact with the end plate. This stop may be made from plastic and is designed as a separate part which is connected to the rest of the piston by means of a screw connection.

The object of the invention is to provide an air spring of simpler construction which is relatively inexpensive to produce.

In the case of an air spring of the type referred to in the introduction, this object is achieved by the fact that the inner section, on the side facing towards the end plate, is provided with an end section which in the direction of the end plate extends beyond the outer casing, is integral with the rest of the inner section and is able to function as a stop which can strike against the end plate.

The piston of the air spring according to the invention is relatively inexpensive to produce. Moreover, the air spring is easier to fit than the known air spring. Preferably, the inner section is cylindrical, and the outer casing is arranged coaxially around it.

Further preferred embodiments of the air spring according to the invention are defined in the dependent claims.

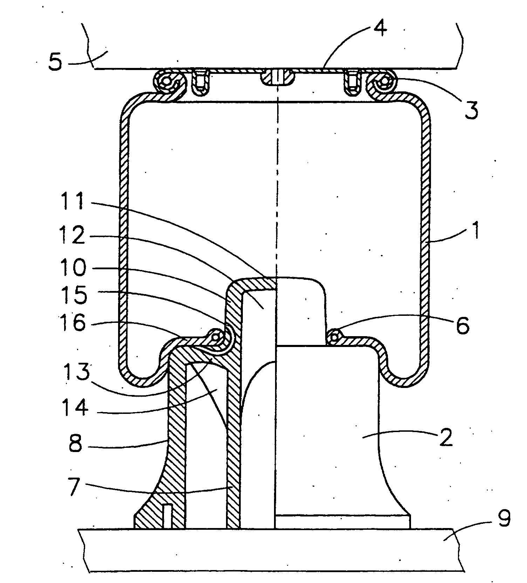

Below, the invention will be explained in more detail with reference to the drawing, in which the single figure shows a preferred embodiment of an air spring according to the invention, partially in longitudinal section and partially as a side view.

The air spring which is shown in the figure and is intended in particular to be used in an air spring system for a wheel axle of a vehicle comprises a rolling bellows 1 and a piston 2 which is coaxial with respect to the rolling bellows 1, can be moved into and out of the rolling bellows in the axial direction of the rolling bellows 1 and along which the rolling bellows 1 rolls during this movement. A first end edge 3 of the rolling bellows 1 is connected in a sealing manner to an end plate 4. This end plate may be connected to a part 5, which is shown in very diagrammatic form, of a chassis of a vehicle, for example by means of a screw connection. A second end edge 6 of the rolling bellows 1 is connected in a sealing manner to the piston 2.

The piston 2 is formed as a single part made. from plastic and comprises a central, cylindrical inner section 7 and a cylindrical outer casing 8 which is arranged coaxially around and is joined to the inner section and along which the rolling bellows 1 can roll. The piston may be connected to a bearing arm, which is mounted beneath the vehicle, of a vehicle axle. A part 9 of the bearing arm is shown in the figure.

On the side facing towards the end plate 4, the cylindrical inner section 7 is provided with an end section 10 which, in the direction of the end plate, projects beyond the outer casing 8, is integral with the rest of the cylindrical inner section 7 and can function as a stop which is able to come into contact with the end plate 4. On the side facing towards the end plate 4, the end section 10 is provided with an end wall 11. Reinforcement ribs 12, which are preferably radially oriented, may be arranged inside the end section 10.

The cylindrical inner section 7 with the end section 11 is joined to the cylindrical outer casing by means of a flange section 13 which extends substantially in the radial direction. To strengthen the joint between the flange section 13 and the inner section 7, radial reinforcement ribs 14 may be arranged in the corner area between the flange section 13 and the inner section 7.

At the location of the transition between the flange section 13 and the cylindrical inner section 7 with end section 10, the second end edge 6 of the rolling bellows 1 is connected to the piston 2 in a sealing but removable manner. Such a connection can be achieved by causing the end edge 6 of the rolling bellows 1 to interact in a clamping manner with the end section 10 of the cylindrical inner section 7. The internal pressure in the rolling bellows 1 ensures that the corresponding edge part 16 of the rolling bellows is pressed against the piston 2.

The radial flange section 13 and the adjoining end section 10 of the cylindrical inner section 7 may be provided with a passage 15 which on one side opens out on the outside of the end section 10 and on the other side opens out on that side of the flange section 13 which faces towards the end plate 4. In the normal position of use of the air spring, this passage 15 will be closed on one side by the end part 16 of the rolling bellows 1, which rests against the flange section 13. By means of this passage 15, it is possible to vent the air spring at its maximum length.

The piston 2 is made, for example, from polyamide which, if necessary, is reinforced with fibres. However, other plastic materials may also be suitable.

## Claims

1. Air spring, in particular for an air spring system for a wheel axle of a vehicle, comprising a rolling bellows, a first end edge of which is connected, in a sealing manner, to an end plate and a second end edge of which is connected, in a sealing manner, to a piston which is coaxial with respect to the rolling bellows, can be moved into and out of the rolling bellows in the axial direction of the rolling bellows, and along which the rolling bellows rolls during this movement, the piston being formed as a single part made from plastic, comprising an inner section and a substantially cylindrical outer casing which is arranged around and joined to the inner section and along which the rolling bellows can roll, **characterized in that** the inner section, on the side facing towards the end plate, is provided with an end section which in the direction of the end plate extends beyond the outer casing, is integral with the rest of the inner section and is able to function as a stop which can strike against the end plate.

2. Air spring according to claim 1, **characterized in that** the end section is provided, on the side directed towards the end plate; with an end wall.

3. Air spring according to claim 1 or 2, **characterized in that** that end edge of the cylindrical outer casing which lies on the side of the end plate is joined, via a flange section which extends substantially radially, to the inner section, which is preferably of cylindrical design.

4. Air spring according to claim 3, **characterized in that** the second end edge of the rolling bellows, at the location of the transition between the radial' flange section and the cylindrical inner section having the piston, is connected to the piston in a sealing but removable manner.

5. Air spring according to claim 3, **characterized in that** the radial flange section and the adjoining end section of the cylindrical inner section is provided with a passage which on one side opens out on the outside of the end section and on the other side opens out on that side of the flange section which faces towards the end plate.

## Patentansprüche

1. Luftfeder, insbesondere für ein Luftfedersystem für eine Radachse eines Fahrzeugs, die einen Rollbalg umfasst, wobei ein erster Endrand desselben dichtend an einer Endplatte angebracht ist und ein zweiter Endrand desselben dichtend an einem Kolben angebracht ist, der in Bezug auf den Rollbalg koaxial ist, in der axialen Richtung des Rollbalgs in den Rollbalg hinein und aus ihm heraus bewegt werden kann, und an dem der Rollbalg während dieser Bewegung entlang rollt, wobei der Kolben als ein einzelnes Teil ausgebildet ist, das aus Kunststoff besteht und einen inneren Abschnitt sowie ein im Wesentlichen zylindrisches äußeres Gehäuse umfasst, das um den inneren Abschnitt herum angeordnet und mit ihm verbunden ist und an dem der Rollbalg entlang rollen kann, **dadurch gekennzeichnet, dass** der innere Abschnitt an der Seite, die der Endplatte zugewandt ist, mit einem Endabschnitt versehen ist, der sich in der Richtung der Endplatte über das äußere Gehäuse hinaus erstreckt, integral mit dem Rest des inneren Abschnitts verbunden ist und in der Lage ist, als Anschlag zu fungieren, der an der Endplatte anschlagen kann.

2. Luftfeder nach Anspruch 1, **dadurch gekennzeichnet, dass** der Endabschnitt an der Seite, die auf die Endplatte zu gerichtet ist, mit einer Endwand versehen ist.

3. Luftfeder nach Anspruch 1 oder 2, **dadurch gekennzeichnet, dass** der Endrand des zylindrischen äußeren Gehäuses, der an der Seite der Endplatte liegt, über einen Flanschabschnitt, der sich im Wesentlichen radial erstreckt, mit dem inneren Abschnitt verbunden ist, der vorzugsweise zylindrisch aufgebaut ist.

4. Luftfeder nach Anspruch 3, **dadurch gekennzeichnet, dass** der zweite Endrand des Rollbalgs an der Stelle des Übergangs zwischen dem radialen Flanschabschnitt und dem zylindrischen inneren Abschnitt, der den Kolben aufweist, an dem Kolben dichtend, jedoch lösbar, angebracht ist.

5. Luftfeder nach Anspruch 3, **dadurch gekennzeichnet, dass** der radiale Flanschabschnitt und der angrenzende Endabschnitt des zylindrischen inneren Abschnitts mit einem Durchlass versehen sind, der sich an einer Seite zur Außenseite des Endabschnitts hin öffnet und sich an der anderen Seite auf der Seite des Flanschabschnitts öffnet, die der Endplatte zugewandt ist.

## Revendications

1. Ressort pneumatique, en particulier pour un système de ressort pneumatique pour une fusée de roue d'un véhicule, comprenant des soufflets à roulement, dont un premier bord d'extrémité est connecté, de manière étanche, à une plaque d'extrémité et dont un deuxième bord d'extrémité est connecté, de manière étanche, à un piston qui est coaxial par rapport aux soufflets à roulement, peut être déplacé dans et hors des soufflets à roulement dans la direction axiale des soufflets à roulement, et le long duquel les soufflets à roulement roulent lors de ce mouvement, le piston étant formé d'une pièce unique faite de plastique, comprenant une section interne et un boîtier externe sensiblement cylindrique qui est agencé autour de la section interne et joint à celle-ci et le long duquel les soufflets à roulement peuvent rouler, **caractérisé en ce que** la section interne, sur le côté faisant face à la plaque d'extrémité, est pourvue d'une section d'extrémité qui, dans la direction de la plaque d'extrémité, s'étend au-delà du boîtier externe, est faite d'un seul bloc avec le reste de la section interne et est capable de fonctionner comme un arrêt qui peut buter contre la plaque d'extrémité.

2. Ressort pneumatique selon la revendication 1, **caractérisé en ce que** la section d'extrémité est pourvue, sur le côté orienté vers la plaque d'extrémité, d'une paroi d'extrémité.

3. Ressort pneumatique selon la revendication 1 ou 2, **caractérisé en ce que** le bord d'extrémité du boîtier externe cylindrique qui repose sur le côté de la plaque d'extrémité est joint, par l'intermédiaire d'une section de bride qui s'étend de manière sensiblement radiale, à la section interne, qui est de préférence de conception cylindrique.

4. Ressort pneumatique selon la revendication 3, **caractérisé en ce que** le deuxième bord d'extrémité des soufflets à roulement, à l'emplacement de la transition entre la section de bride radiale et la section interne cylindrique comprenant le piston, est connecté au piston d'une manière étanche mais amovible.

5. Ressort pneumatique selon la revendication 3, **caractérisé en ce que** la section de bride radiale et la section d'extrémité attenante de la section interne cylindrique est pourvue d'un passage qui, sur un côté, s'ouvre sur l'extérieur de la section d'extrémité et sur l'autre côté, s'ouvre sur le côté de la section de bride qui fait face à la plaque d'extrémité.
